(19) **Europäisches Patentamt**

**European Patent Office**

**Office européen des brevets**

(11) **EP 1 046 675 B1**

(12) **FASCICULE DE BREVET EUROPEEN**

(45) Date de publication et mention
de la délivrance du brevet:
**01.03.2006 Bulletin 2006/09**

(51) Int Cl.:
*C08L 77/12* $^{(2006.01)}$     *C08L 101/00* $^{(2006.01)}$
*C08L 77/12* $^{(2006.01)}$     *C08L 101/00* $^{(2006.01)}$
*C08L 101/00* $^{(2006.01)}$     *C08L 77/12* $^{(2006.01)}$

(21) Numéro de dépôt: **00400961.9**

(22) Date de dépôt: **07.04.2000**

(54) **Compositions de polymères antistatiques**

Antistatische Polymerzusammensetzungen

Antistatic polymer compositions

(84) Etats contractants désignés:
**AT BE CH CY DE DK ES FI FR GB GR IE IT LI LU
MC NL PT SE**

(30) Priorité: **23.04.1999 FR 9905430**

(43) Date de publication de la demande:
**25.10.2000 Bulletin 2000/43**

(73) Titulaire: **Arkema
92800 Puteaux (FR)**

(72) Inventeurs:
• **Hilgers, Hermann Josef
27170 Le Tilleul Othon (FR)**
• **Linemann, Reinhard
27300 Bernay (FR)**
• **Lacroix, Christophe
27700 Harquency (FR)**

(74) Mandataire: **Neel, Henry et al
ARKEMA
Département Propriété Industrielle
4-8, cours Michelet,
La Défense 10
92091 Paris La Défense Cedex (FR)**

(56) Documents cités:
**EP-A- 0 242 158          EP-A- 0 290 761
US-A- 4 331 786**

## Description

La présente invention concerne une composition de polymères antistatiques et plus précisément une composition comprenant un polymère thermoplastique (A) et un copolymère (B) à blocs polyamides et blocs polyéthers comprenant essentiellement des motifs oxyde d'éthylène —(C2H4—O)— le copolymère (B) ayant une température de fusion comprise entre 90 et 135°C.

Il s'agit de donner au polymère thermoplastique (A) des propriétés antistatiques. La formation et la rétention de charges d'électricité statique à la surface de la plupart des matières plastiques sont connues. La présence d'électricité statique sur des films thermoplastiques conduit par exemple ces films à se coller les uns sur les autres rendant leur séparation difficile. La présence d'électricité statique sur des films d'emballage peut provoquer l'accumulation de poussières sur les objets à emballer et ainsi gêner leur utilisation. L'électricité statique peut aussi endommager des microprocesseurs ou des constituants de circuits électroniques. L'électricité statique peut aussi provoquer la combustion ou l'explosion de matières inflammables telles que par exemple les billes de polystyrène expansible qui contiennent du pentane.

L'art antérieur a décrit des agents antistatiques tels que des surfactants ioniques du type amines ethoxylées ou sulfonates qu'on ajoute dans des polymères. Cependant les propriétés antistatiques des polymères dependent de l'humidité ambiante et elles ne sont pas permanentes puisque ces agents migrent à la surface des polymères et disparaissent. Il a alors été proposé comme agents antistatiques des copolymères à blocs polyamides et blocs polyethers hydrophiles, ces agents ont l'avantage de ne pas migrer et donc de donner des propriétés antistatiques permanentes et de plus indépendantes de l'humidité ambiante.

Le but de la présente invention est d'apporter des propriétés antistatiques permanentes à un polymère (A) thermosensible, la demanderesse a trouvé qu'il est particulièrement avantageux d'utiliser un copolymère (B) ayant une basse température de fusion. L'art antérieur n'a pas décrit de tels systèmes.

Le brevet EP 525 365 décrit des compositions antistatiques comprenant 100 parties de PVC et 5 à 15 parties d'un copolymère (i) à blocs polyamides et blocs polyéthylène glycol (PEG). Le copolymère (i) a une température de fusion de 155,6°C si les blocs polyamide sont en polyamide 12 (PA 12) et de 195°C si les blocs polyamide sont en PA 6.

Le brevet EP 829 520 décrit des compositions antistatiques comprenant un thermoplastique tel que le PVC, le polypropylène, le polyéthylène ou l' ABS et un copolymère (i) à blocs polyamides et blocs polyéthylène glycol déposé sur des fibres. La température de fusion de (i) n'est pas précisée, mais la description renvoie au brevet EP 613 819 pour la définition de (i). Dans ce dernier texte les blocs polyamide de (i) sont constitués de PA 6 ce qui implique des température de fusion d'au moins 195°C.

La demande de brevet JP 05 311 022 A publiée le 22 novembre 1993 (priorité 92JP-143 633) décrit des mélanges de PVC, d'un copolymère d'un ester insaturé et d'oxyde de carbone, de polyéthylène glycol et d'un sel inorganique choisi parmi les perchlorates de métaux alcalins et parmi les thiocyanates de métaux alcalins. Le polyéthylène glycol n'a pas de point de fusion mais il migre facilement et donc les propriétés antistatiques disparaissent.

L'art antérieur précédent a décrit soit des polymères ayant une température de fusion trop élevée soit des polymères qui migrent et n'a donc pas décrit les systèmes de la présente invention.

Selon l'invention les blocs polyamides du copolymère (B) sont des copolyamides résultant de la condensation d'au moins un acide alpha oméga aminocarboxylique (ou un lactame), au moins une diamine et au moins un acide dicarboxylique. Un avantage de cette forme est qu'on peut choisir des comonomères des copolyamides qui améliorent la compatibilisation de (A) et (B).

Un autre avantage des compositions de la présente invention concerne les polymères (A) qui ne sont pas thermosensibles mais qui se transforment à basse température, il est inutile d'utiliser de hautes temperatures seulement pour fondre le copolymère (B). En effet les blocs polyether sont parfois sensibles aux hautes températures et on observe des colorations de (B).

Un autre avantage des compositions de l'invention est la facilité de leur préparation. En effet les compositions de l'invention sont généralement préparées par mélange de (A) et (B) dans des extrudeuses monovis ou bivis, des mélangeurs BUSS®, des malaxeurs ou tout dispositif équivalent utilisé dans la technologie des thermoplastiques. La basse température de fusion facilite le mélange de (A) et (B).

L'invention va maintenant être décrite en détails.

A titre d'exemple de polymères (A) on peut citer les polyoléfines, les polyamides, les polymères fluorés, les polyesters saturés, le polycarbonate, les résines styréniques, le PMMA, les polyuréthanes thermoplastiques (TPU), le PVC, les copolymères de l'éthylène et de l'acétate de vinyle (EVA), les copolymères de l'éthylène et d'un (méth)acrylate d'alkyle, l'ABS, le SAN, le polyacétal et les polycétones. Les polyoléfines au sens de l'invention désignent aussi les copolymères de l'éthylène et d'une alpha oléfine. On ne sortirait pas du cadre de l'invention en utilisant un mélange de deux ou plusieurs polymères (A).

S'agissant du copolymère (B) avantageusement sa viscosité inhérente en solution est comprise entre 0,8 et 1,75 dl/g. Cette viscosité relative est mesurée en solution à 0,5 % dans le métacrésol à l'aide d'un viscosimètre OSTWALD.

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides.

Les copolymères de la présente invention sont avantageusement ceux décrits au point 3).

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne.

Selon l'invention les séquences polyamides résultent de la condensation d'au moins un acide alpha oméga amino carboxylique (ou un lactame) ayant de 6 à 12 atomes de carbone, au moins un diacide carboxylique ayant de 4 à 12 atomes de carbone, et au au moins une diamine et sont de faible masse c'est-à-dire $\overline{\text{Mn}}$ de 400 à 1000 et avantageusement de 400 à 800. A titre d'exemple d'acide alpha oméga aminocarboxylique on peut citer l'acide aminoundécanoïque et l'acide aminododécanoïque. A titre d'exemple d'acide dicarboxylique on peut citer l'acide adipique, l'acide sebacique, l'acide isophtalique, l'acide butanedioïque, l'acide 1,4 cyclohexyldicarboxylique, l'acide térephtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH$_2$)$_{10}$-COOH.

A titre d'exemple de lactame on peut citer le caprolactame et le lauryllactame.

On évitera le caprolactame à moins de purifier le polyamide du caprolactame monomère qui y reste dissous.

La diamine peut être une diamine aliphatique ayant de 6 à 12 atomes, elle peut être arylique et/ou cyclique saturée.

A titre d'exemples on peut citer l'hexaméthylènediamine, la pipérazine, la tetraméthylène diamine, l'octaméthylène diamine, la decaméthylène diamine, la dodecaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

Les différents constituants de la séquence polyamide et leur proportion sont choisis pour obtenir une température de fusion comprise entre 90 et 135°C.

Les blocs polyether peuvent representer 5 à 85 % en poids de (B). Les blocs polyether peuvent contenir d'autres motifs que les motifs oxyde d'éthylène tels que par exemple de l'oxyde de propylène ou du polytetrahydrofurane(qui conduit aux enchainements polytetraméthylène glycol). On peut aussi utiliser simultanement des blocs PEG c'est à dire ceux constitués de motifs oxyde d'éthylène, des blocs PPG c'est à dire ceux constitués de motifs oxyde de propylène et des blocs PTMG c'est à dire ceux constitués de motifs tetraméthylène glycol appelés aussi polytetrahydrofurane. On utilise avantageusement des blocs PEG ou des blocs obtenus par oxyethylation de bisphenols, tels que par exemple le bisphenol A. Ces derniers produits sont decrits dans le brevet EP 613 919. La quantité de blocs polyether dans (B) est avantageusement de 10 à 55% et de préférence 20 à 45% en poids de (B).

Des copolyamides à basse température de fusion sont decrits dans les brevets US 4 483 975, DE 3 730 504, US 5 459 230 on reprend les mêmes proportions des constituants pour les blocs polyamides de (B). (B) peut être aussi les copolymeres decrits dans US 5 489 667.

Les copolymères de l'invention peuvent être préparés par tout moyen permettant d'accrocher les blocs polyamide et les blocs polyéther. En pratique on utilise essentiellement deux procédés l'un dit en 2 étapes, l'autre en une étape.

Le procédé en 2 étapes consiste d'abord à préparer les blocs polyamide à extrémités carboxyliques par condensation des précurseurs de polyamide en présence d'un diacide carboxylique limiteur de chaîne puis dans une deuxième étape à ajouter le polyéther et un catalyseur. Les précurseurs comprenant déjà un diacide carboxylique on l'utilise en excédent par rapport à la stoechiométrie des diamines. La réaction se fait habituellement entre 180 et 300°C, de préférence 200 à 260°C la pression dans le réacteur s'établit entre 5 et 30 bars, on la maintient environ 2 heures. On réduit lentement la pression en mettant le réacteur à l'atmosphère puis on distille l'eau excédentaire par exemple une heure ou deux.

Le polyamide à extrémités acide carboxylique ayant été préparé on ajoute ensuite le polyéther et un catalyseur. On peut ajouter le polyéther en une ou plusieurs fois, de même pour le catalyseur. Selon une forme avantageuse on ajoute d'abord le polyéther, la réaction des extrémités OH du polyéther et des extrémités COOH du polyamide commence avec formations de liaison ester et élimination d'eau ; on élimine le plus possible l'eau du milieu réactionnel par distillation puis on introduit le catalyseur pour achever la liaison des blocs polyamide et des blocs polyéther. Cette deuxième étape s'effectue sous agitation de préférence sous un vide d'au moins 5 mm Hg (650 Pa) à une température telle que les réactifs et les copolymères obtenus soient à l'état fondu. A titre d'exemple cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible. Le catalyseur est défini comme étant tout produit permettant de faciliter la liaison des blocs polyamide et des blocs polyéther par estérification. Le catalyseur est avantageusement un dérivé d'un métal (M) choisi dans le groupe formé par le titane, le zirconium et le hafnium.

A titre d'exemple de dérivé on peut citer les tétraalcoxydes qui répondent à la formule générale $M(OR)_4$, dans laquelle M représente le titane, le zirconium ou le hafnium et les R, identiques ou différents, désignent des radicaux alcoyles, linéaires ou ramifiés, ayant de 1 à 24 atomes de carbone.

Les radicaux alcoyles en $C_1$ à $C_{24}$ parmi lesquels sont choisis les radicaux R des tétraalcoxydes utilisés comme catalyseurs dans le procédé suivant l'invention sont par exemple tels que méthyl, éthyl, propyl, isopropyl, butyl, éthylhexyl, décyl, dodécyl, hexadodécyl. Les catalyseurs préférés sont les tétraalcoxydes pour lesquels les radicaux R, identiques ou différents, sont des radicaux alcoyles en $C_1$ à $C_8$. Des exemples de tels catalyseurs sont notamment $Z_r(OC_2H_5)_4$, $Z_r(O\text{-}isoC_3H_7)_4$, $Z_r(OC_4H_9)_4$, $Z_r(OC_5H_{11})_4$, $Z_r(OC_6H_{13})_4$, $H_f(OC_2H_5)_4$, $H_f(OC_4H_9)_4$, $H_f(O\text{-}isoC_3H_7)_4$.

Le catalyseur utilisé dans ce procédé suivant l'invention peut consister uniquement en un ou plusieurs des tétraalcoxydes de formule $M(OR)_4$ définis précédemment. Il peut encore être formé par l'association d'un ou plusieurs de ces tétraalcoxydes avec un ou plusieurs alcoolates alcalins ou alcalino-terreux de formule $(R_1O)_pY$ dans laquelle $R_1$ désigne un reste hydrocarboné, avantageusement un reste alcoyle en $C_1$ à $C_{24}$, et de préférence en $C_1$ à $C_8$, Y représente un métal alcalin ou alcalino-terreux et p est la valence de Y. Les quantités d'alcoolate alcalin ou alcalino-terreux et de tétraalcoxydes de zirconium ou de hafnium que l'on associe pour constituer le catalyseur mixte peuvent varier dans de larges limites. On préfère toutefois utiliser des quantités d'alcoolate et de tétraalcoxydes telles que la proportion molaire d'alcoolate soit sensiblement égale à la proportion molaire de tétraalcoxyde.

La proportion pondérale de catalyseur, c'est-à-dire du ou des tétraalcoxydes lorsque le catalyseur ne renferme pas d'alcoolate alcalin ou alcalino-terreux ou bien de l'ensemble du ou des tétraalcoxydes et du ou des alcoolates alcalins ou alcalino-terreux lorsque le catalyseur est formé par l'association de ces deux types de composés, varie avantageusement de 0,01 à 5 % du poids du mélange du polyamide dicarboxylique avec le polyoxyalcoylène glycol, et se situe de préférence entre 0,05 et 2 % de ce poids.

A titre d'exemple d'autres dérivés on peut citer aussi les sels du métal (M) en particulier les sels de (M) et d'un acide organique et les sels complexes entre l'oxyde de (M) et/ou l'hydroxyde de (M) et un acide organique. Avantageusement l'acide organique peut être l'acide formique, l'acide acétique, l'acide propionique, l'acide butyrique, l'acide valérique, l'acide caproïque, l'acide caprylique, l'acide laurique, l'acide myristique, l'acide palmitique, l'acide stéarique, l'acide oléique, l'acide linolique, l'acide linolénique, l'acide cyclohexane carboxylique, l'acide phénylacétique, l'acide benzoïque, l'acide salicylique, l'acide oxalique, l'acide malonique, l'acide succinique, l'acide glutarique, l'acide adipique, l'acide maléique, l'acide fumarique, l'acide phtalique et l'acide crotonique. Les acides acétique et propionique sont particulièrement préférés. Avantageusement M est le zirconium. Ces sels peuvent s'appeler sels de zirconyle. La demanderesse sans être liée par cette explication pense que ces sels de zirconium et d'un acide organique ou les sels complexes cités plus haut libèrent $ZrO^{++}$ au cours du procédé. On utilise le produit vendu sous le nom d'acétate de zirconyle. La quantité à utiliser est la même que pour les dérivés $M(OR)_4$.

Ce procédé et ces catalyseurs sont décrits dans les brevets US 4,332,920, US 4,230,838, US 4,331,786, US 4,252,920, JP 07145368A, JP 06287547A, et EP 613919.

S'agissant du procédé en une étape on mélange tous les réactifs utilisés dans le procédé en deux étapes c'est-à-dire les précurseurs de polyamide, le polyéther et le catalyseur. Il s'agit des mêmes réactifs et du même catalyseur que dans le procédé en deux étapes décrit plus haut.

Le copolymère a essentiellement les mêmes blocs polyéthers, les mêmes blocs polyamides, mais aussi une faible partie des différents réactifs ayant réagi de façon aléatoire qui sont répartis de façon statistique le long de la chaîne polymère.

On ferme et on chauffe le réacteur sous agitation comme dans la première étape du procédé en deux étapes décrit plus haut La pression s'établit entre 5 et 30 bars. Quand elle n'évolue plus on met le réacteur sous pression réduite tout en maintenant une agitation vigoureuse des réactifs fondus. La réaction est suivie comme précédemment pour le procédé en deux étapes.

Le catalyseur utilisé dans le procédé en une étape est de préférence un sel du métal (M) et d'un acide organique ou un sel complexe entre l'oxyde de (M) et/ou l'hydroxyde de (M) et un acide organique.

S'agissant des proportions de (A) et (B) la quantité de (B) dépend du niveau d'antistatisme demandé et de la proportion de polyéther dans (B). La proportion de (A) et (B) varie de 2 à 40 partie de (B) pour 98 à 60 parties de (A), avantageusement on utilise 2 à 20 parties de (B) pour 98 à 80 parties de (A).

Les compositions selon l'invention peuvent renfermer en outre au moins un additif choisi parmi :

- les charges (minérales, anti-feu...),
- les fibres
- les sels inorganiques et/ou organiques et/ou de polyélectrolyte
- les colorants ;
- les pigments ;
- les azurants ;
- les anti-oxydants ;
- les stabilisateurs UV.

## Exemple

Préparation du copolymère 6-6/6-10/12/PEG.6 en proportions 14/14/42/30. "PEG.6" signifie que le polyether est le PEG et que l'acide adipique est le limiteur de chaîne. La proportion du limiteur de chaîne est de 5 à 20 moles pour 100 moles de l'ensemble polyether limiteur de chaîne.

Les monomères suivants sont introduits dans un autoclave qui est équipé d'un agitateur : 16800 g lauryllactame, 3557 g acide sébacique (C10), 5408 g acide adipique et 6188 g hexaméthylènediamine (sous forme d'une solution de 73,1 % dans l'eau).

Le mélange ainsi formé est mis sous atmosphère inerte et chauffé jusqu'à ce que la température atteigne 290°C en maintenant une agitation vigoureuse dès la fusion des réactifs. Pendant 2 heures on maintient 290°C et 25 bars de pression (précondensation). Ensuite on diminue la pression lentement (1,25 h) de 25 bars à la pression atmosphérique et la température de 290 à 245°C. Maintenant on introduit une dispersion fine de 9711 g polyoxyéthylène dihydroxylé (Mn = 600) et 70 g d'une solution de zirconylacétate dans l'eau / acide acétique (0,625 % charge totale du zirconylacétate ; $pH_{solution}$ = 3,0-3,5).

Le mélange obtenu est mis sous pression réduite de 30 mbar. La réaction est poursuivie pendant une durée de 3 heures. Le produit est extrudé dans un bain d'eau et granulé. Le produit obtenu a une viscosité inhérente égale à 1,12 dl/g; température de fusion (optiquement déterminée) : 120 - 130°C.

## Revendications

**1.** Composition de polymères antistatiques comprenant un polymère thermoplastique (A) et un copolymère (B) à blocs polyamides et blocs polyéthers comprenant essentiellement des motifs oxyde d'éthylène -(C2H4-O)- le copolymère (B) ayant une température de fusion comprise entre 90 et 135°C, et dans laquelle les blocs polyamides du copolymère (B) sont des copolyamides résultant de la condensation d'au moins un acide alpha oméga aminocarboxylique (ou un lactame), au moins une diamine et au moins un acide dicarboxylique.

**2.** Composition selon la revendication 1 dans laquelle le polymère (A) est choisi parmi les polyoléfines, les polyamides, les polymères fluorés, les polyesters saturés, le polycarbonate, les résines styréniques, le PMMA, les polyuréthanes thermoplastiques (TPU), le PVC, les copolymères de l'éthylène et de l'acetate de vinyle (EVA), les copolymères de l'éthylène et d'un (meth)acrylate d'alkyle, l'ABS, le SAN, le polyacétal, les polycétones ou un mélange d'au moins deux d'entre eux.

**3.** Composition selon l'une quelconque des revendications precedentes dans laquelle les blocs polyether representent en poids 5 à 85 % de (B).

## Claims

**1.** Antistatic polymer composition comprising a thermoplastic polymer (A) and a copolymer (B) comprising polyamide blocks and polyether blocks comprising essentially ethylene oxide units -($C_2H_4$-O)-, the copolymer (B) having a melting temperature of between 90 and 135°C, and in which the polyamide blocks of the copolymer (B) are copolyamides resulting from the condensation of at least one $\alpha,\omega$-aminocarboxylic acid (or one lactam), at least one diamine and at least one dicarboxylic acid.

**2.** Composition according to Claim 1, in which the polymer (A) is chosen from polyolefins, polyamides, fluorinated polymers, saturated polyesters, polycarbonate, styrene resins, PMMA, thermoplastic polyurethanes (TPU), PVC, copolymers of ethylene and of vinyl acetate (EVA), copolymers of ethylene and of an alkyl (meth)acrylate, ABS, SAN, polyacetal, polyketones or a mixture of at least two of them.

**3.** Composition according to either one of the preceding claims, in which the polyether blocks represent 5 to 85% by weight of (B).

## Patentansprüche

**1.** Antistatische Polymerzusammensetzung, enthaltend ein thermoplastisches Polymer (A) und ein Copolymer (B) mit Polyamidblöcken und Polyetherblökken, die im wesentlichen Ethylenoxid-Einheiten -($C_2H_4$-O-)- enthalten, wobei das Copolymer (B) einen Schmelzpunkt zwischen 90 und 135°C aufweist, und worin es sich bei den Polyamidblöcken des Copolymers (B) um Copolyamide handelt, die sich aus der Kondensation mindestens einer alpha,omega-Aminocarbonsäure (oder eines Lactams), mindestens eines Diamins und mindestens einer Dicarbonsäure ergeben.

2. Zusammensetzung nach Anspruch 1, worin das Polymer (A) unter Polyolefinen, Polyamiden, Fluorpolymeren, gesättigten Polyestern, Polycarbonat, Styrolharzen, PMMA, thermoplastischen Polyurethanen (TPU), PVC, Copolymeren von Ethylen und Vinylacetat (EVA), Copolymeren von Ethylen und einem Alkyl(meth)acrylat, ABS, SAN, Polyacetal, Polyketonen oder einer Mischung aus mindestens zwei dieser Substanzen ausgewählt ist.

3. Zusammensetzung nach einem der vorhergehenden Ansprüche, worin die Polyetherblöcke 5 bis 85 Gew.-% von (B) ausmachen.